# FASCICULE DE BREVET EUROPEEN

(11) **EP 0 786 380 B1**
(45) Date de publication et mention de la délivrance du brevet: **18.04.2001**
(21) Numéro de dépôt: 97490002.9
(22) Date de dépôt: 21.01.1997
(51) Int. Cl.: B60R 13/02, B29C 45/14

(54) **Panneau, notamment destiné à l'habillage intérieur des portières de véhicules présentant au moins localement une zone d'aspect esthétique**
Paneel, insbesondere für Innenverkleidung von Kraftfahrzeugtüren mit mindestens einem lokalen ästhetischen Bereich
Panel, especially for interior trims of vehicle doors with at least one locally aesthetic area

(30) Priorité: 25.01.1996 FR 9601102
(43) Date de publication de la demande: 30.07.1997
(73) Titulaire: Visteon Systemes Interieurs, 92927 La Defense Cedex (FR)
(72) Inventeur: Duriez, Dominique, 59147 Gondecourt (FR)
(74) Mandataire: Duthoit, Michel

(56) Documents cités:
- EP-A- 0 601 272
- EP-A- 0 639 442
- WO-A-94/25248
- DE-A- 4 343 240
- GB-A- 2 271 956
- PATENT ABSTRACTS OF JAPAN vol. 9, no. 194 (M-403), 10 Août 1985 & JP 60 058821 A (DAINIPPON INSATSU), 5 Avril 1985,
- PATENT ABSTRACTS OF JAPAN vol. 9, no. 194 (M-403), 10 Août 1985 & JP 60 058822 A (DAINIPPON INSATSU), 5 Avril 1985,

## Description

La présente invention concerne un procédé de fabrication de panneau, notamment destiné à l'habillage intérieur des portières de véhicule.

Bien que plus particulièrement prévue pour des véhicules automobiles, elle pourra également être utilisée dans tout type de véhicule maritime, aérien et/ou terrestre.

De manière plus large, elle trouvera ses applications dans tous les secteurs de l'activité économique dans lesquels on est amené à rencontrer des panneaux d'habillage.

Actuellement, dans le domaine automobile, on connaît des panneaux comprenant une âme présentant localement une pièce de revêtement. Afin d'assurer un raccord, dont l'aspect esthétique soit satisfaisant, entre la surface extérieure de ladite âme et celle de ladite pièce de revêtement, cette dernière est généralement munie d'une jupe qui est insérée dans une gorge prévue dans l'âme. Les bords de la pièce de revêtement sont ainsi dissimulés au fond de ladite gorge.

Bien que parfois satisfaisants, de tels panneaux présentent souvent des altérations au niveau de la périphérie de leur pièce de revêtement.

En effet, ces dernières sont constituées, dans la plupart des cas, d'un insert recouvert d'une peau. Ainsi, lors de la fabrication des panneaux, de la matière s'infiltre entre ladite peau et ledit insert et, malgré la fonction dissimulatrice de la gorge, entraîne la formation de bavures visibles sur le pourtour de la pièce de revêtement.

De tels panneaux ne présentent donc plus un aspect esthétique suffisamment satisfaisant pour être commercialisés et doivent être mis au rebut. Il est d'ailleurs à noter que les coûts générés par de tels défauts sont particulièrement importants, leur apparition ayant lieu en fin de cycle alors que le panneau est entièrement constitué. Ils obligent également à multiplier le nombre d'opérations de contrôle.

On connaît en outre, du document DE-A-4.343.240 (correspondant au préambule de la revendication 1) un procédé de fabrication de panneaux, tels que ceux décrits plus haut, mettant en oeuvre un moule, comprenant une matrice inférieure et une matrice supérieure, définissant entre elles un entrefer et dans lequel dit procédé on forme ladite pièce de revêtement en prévoyant, sur au moins une partie de la longueur de ladite jupe, un pied, et on injecte dans ledit moule, au moins sous ladite pièce de revêtement, une résine, apte à former l'âme du panneau, une feuille supplémentaire de matière étant prévue au-dessus de l'âme au moins autour de la zone d'aspect, ladite feuille étant insérée dans la gorge.

Un tel procédé implique donc des difficultés de mise en oeuvre et ne permet pas de laisser visible l'âme à l'extérieur de la zone d'aspect.

Le but de la présente invention est de fabriquer un panneau comprenant une âme, présentant au moins localement une zone d'aspect esthétique et/ou de confort, ainsi que son procédé de fabrication qui pallient les inconvénients précités et permettent de protéger ladite zone lors de la fabrication du panneau.

Un autre but de la présente invention est de proposer un procédé de fabrication d'un panneau comprenant une âme, présentant au moins localement une zone d'aspect esthétique et/ou de confort, qui permette de s'affranchir des jeux de fabrication de ladite âme au niveau de la périphérie de ladite zone.

D'autres buts et avantages de la présente invention apparaîtront au cours de la description qui va suivre qui n'est donnée qu'à titre indicatif et qui n'a pas pour but de la limiter.

La présente invention concerne un procédé de fabrication de panneau, notamment destiné à l'habillage intérieur des portières de véhicule, comprenant une âme, présentant au moins localement dans une zone d'aspect esthétique et/ou de confort, une pièce de revêtement constituée, au moins sur une partie de sa périphérie, au moins d'un insert et d'une peau, ladite pièce de revêtement étant munie, au moins au niveau de ladite partie de sa périphérie, au moins partiellement, d'une jupe, insérée dans une gorge prévue dans l'âme, mettant en oeuvre un moule, comprenant une matrice inférieure et une matrice supérieure définissant entre elles un entrefer, dans lequel dit procédé :
- on forme ladite pièce de revêtement en prévoyant, sur au moins une partie de la longueur de ladite jupe, un pied,
- on injecte dans ledit moule, au moins sous ladite pièce de revêtement, une résine, apte à former l'âme du panneau, caractérisé par le fait que l'on protège ladite pièce de revêtement d'un retour de matière par ledit pied en empêchant l'infiltration de la résine entre la peau et l'insert lors de son injection, un courant étant créé dans l'entrefer avec ladite résine apte à constituer l'âme de manière à plaquer localement ledit pied contre une saillie d'une des matrices inférieure ou supérieure, apte à participer à la formation de la gorge, en réalisant ainsi avec ledit pied un joint d'étanchéité virtuel.

Des modes de réalisation de l'invention sont précisés dans les revendications 2 à 7.

L'invention sera mieux comprise à la lecture de la description suivante accompagnée des dessins en annexe qui en font partie intégrante.

La figure 1 montre, en perspective, un exemple de panneau, partiellement représenté, conforme à l'invention.

La figure 2 est une vue de dessus d'après la figure 1.

La figure 3 illustre, en vue de coupe selon l'axe III-III représenté à la figure 2, une étape d'un exemple de mise en oeuvre du procédé conforme à l'invention.

La figure 4 présente, selon le même axe de coupe, une autre étape dudit exemple de mise en oeuvre du procédé conforme à l'invention.

La présente invention concerne tout d'abord un panneau, notamment destiné à l'habillage intérieur des portières de véhicule.

Bien que plus particulièrement prévue pour des véhicules automobiles, elle pourra également être utilisée pour tout type de véhicule maritime, aérien et/ou terrestre. De manière plus générale, elle trouvera ses applications dans tous les domaines de l'activité économique dans lesquels on est amené à rencontrer des panneaux d'habillage.

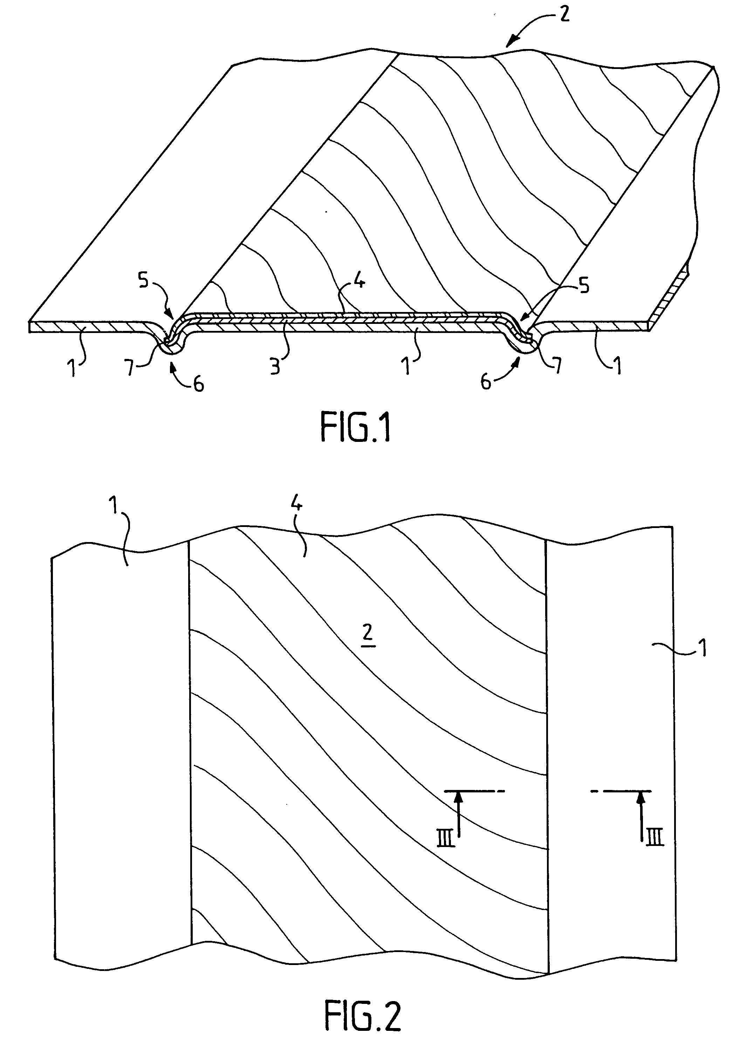

Aux figures 1 et 2, on constate que le panneau, conforme à l'invention, comprend une âme 1 présentant au moins localement une zone 2 d'aspect esthétique et/ou de confort.

Par panneau, on entend, de manière générale, pièce dont l'épaisseur est faible vis-à-vis de ses autres dimensions et présentant, aussi bien un profil sensiblement plat qu'un profil en creux et/ou en bosse plus ou moins incurvé.

Selon l'exemple représenté, l'âme 1 se prolonge au-delà de la zone 2 au moins le long de deux de ses côtés et constitue ainsi, notamment, un cadre autour deladite zone 2.

De manière à renforcer l'aspect esthétique global du panneau, ledit cadre peut d'ailleurs être, selon certains modes de réalisation, traité sur sa surface extérieure, c'est-à-dire celle se trouvant du même côté que la zone 2, de manière à permettre, notamment, qu'elle soit peinte et/ou munie d'un gainage.

La zone 2 d'aspect esthétique et/ou de confort constitue, par exemple, au moins partiellement, une pièce de revêtement de l'âme 1.

A ce sujet, on entend par zone de confort, région du panneau offrant un contact souple et/ou moëlleux au toucher.

Ladite zone 2 est constituée, au moins sur une partie de sa périphérie, au moins d'un insert 3 et d'une peau 4. Elle est munie, de plus, au moins au niveau de ladite partie de sa périphérie, au moins partiellement, d'une jupe 5, insérée dans une gorge 6 prévue dans l'âme 1.

Ladite jupe 5 est ainsi, par exemple, assujettie à l'un des flancs de ladite gorge 6.

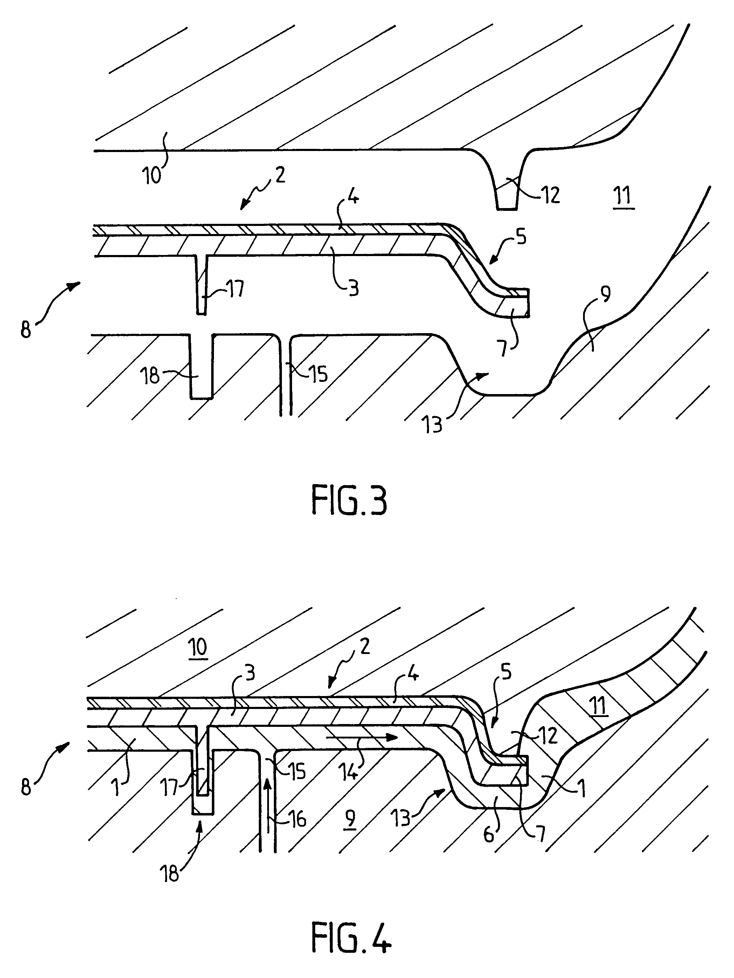

Si l'on se reporte maintenant aux figures 3 et 4, on constate que, selon l'invention, ladite jupe 5 présente, sur au moins une partie de sa longueur, un pied 7, apte à protéger ladite zone 2 d'un retour de matière lors de la fabrication du panneau. Grâce à la présence dudit pied 7, ladite zone 2 ne peut donc plus être dégradée et l'aspect esthétique du panneau obtenu est particulièrement satisfaisant.

Selon le mode illustré de réalisation de l'invention, la zone 2 est munie, par exemple, d'une jupe 5 tout le long d'au moins deux de ses côtés prévus en vis-à-vis et chacune desdites jupes 5 présente un pied 7 sur toute leur longueur.

Ce dernier constitue ainsi, par exemple, un prolongement de la zone 2, orienté de manière oblique par rapport à la jupe 5, l'extrémité distale dudit pied 7 étant dirigée vers l'extérieur de ladite zone 2.

Selon l'exemple illustré, ledit pied 7 est ainsi orienté sensiblement parallèlement au fond de la gorge 6.

Cela étant, ladite jupe 5 et ledit pied 7 sont constitués, comme représentés, notamment dudit insert 3 et de ladite peau 4.

Selon un autre mode de réalisation, le pied 7 est formé uniquement de l'insert 3.

Par ailleurs, l'âme 1 et l'insert 3 sont constitués, par exemple du même matériau. Il pourra s'agir, notamment d'une résine thermoplastique telle que, entre autres du polypropylène. L'adhésion de ces deux couches sera ainsi facilitée.

Toutefois, il faudra veiller, lors de la fabrication du panneau, à ne pas risquer d'endommager la peau 4. Pour cela, on pourra prévoir, notamment, la présence d'agents aptes à abaisser la conductivité thermique de la résine formant l'insert 3 afin que la température utilisée lors de l'injection de l'âme 1 n'entraîne pas de déformation de la zone 2.

Selon un autre mode de réalisation, l'insert 3 est constitué d'un panneau de matériau composite, notamment formé de fibres cellulosiques.

La peau 4 comprend, par exemple, une couche extérieure de matériau textile tissé ou non tissé et/ou une couche intermédiaire, notamment formée de mousse, apte à renforcer les propriétés de souplesse de ladite peau 4. Il pourra s'agir, par exemple, de mousse polyuréthane.

La présente invention concerne également un procédé de fabrication de panneaux tel que décrit ci-dessus.

Comme représenté aux figures 3 et 4, il met en oeuvre un moule 8, comprenant une matrice inférieure 9 et une matrice supérieure 10, définissant entre elles un entrefer 11.

Ledit moule 10 présente également, par exemple, dans l'une des matrices inférieure ou supérieure 9, 10, au moins une saillie 12, coopérant avec une encoche 13, prévue dans l'autre des matrices inférieure ou supérieure 9, 10, de manière à permettre la formation de la gorge 6 du panneau.

Selon l'invention, on forme la zone 2 en prévoyant, sur au moins une partie de la longueur de la jupe 5, un pied 7 et on injecte dans ledit moule 8, au moins sous ladite zone 2, une résine, apte à former l'âme 1 du panneau, ledit pied 7 étant alors apte à protéger ladite zone 2 d'un retour de matière.

Comme évoqué plus haut, on évite ainsi que ladite résine s'infiltre par le bord extérieur de la jupe entre la peau 4 et l'insert 3 de la zone 2 et dégrade l'aspect du panneau par la présence de bavures au niveau de ladite zone 2.

Pour améliorer encore ces résultats, on peut éventuellement, lors de son injection, créer un courant dans l'entrefer 11 avec ladite résine apte à constituer l'âme 1, comme illustré par la flèche repérée 14, de manière à plaquer localement le pied 7 contre la saillie 12, apte à participer à la formation de la gorge 6, en réalisant ainsi avec ledit pied 7 un joint d'étanchéité virtuel.

En effet, sous la pression de la matière de ladite résine apte à constituer l'âme 1, encore molle, la zone 2 est légèrement déformée et le pied 7 fonctionne alors comme un joint d'étanchéité, prenant appui contre ladite saillie 12 bloquant hermétiquement tout retour de matière au niveau de la jupe 5.

Selon l'exemple représenté, on prévoit un pied 7 de largeur légèrement supérieure à la largeur de la saillie 12. Ledit pied 7 permet alors, en outre, de compenser les jeux de fabrication du panneau au niveau de la gorge 6.

Selon d'autres modes de réalisation, on peut également prévoir un pied 7 de plus grande largeur et remontant sur le flanc de la gorge 6 faisant face à celui occupé par la jupe 5.

Par ailleurs, on prévoit, éventuellement, dans le moule 8, un ou des points d'injection 15 de la résine apte à constituer l'âme 1 et on positionne ladite zone 2 au-dessus desdits points d'injection 15.

Ladite résine est ainsi injectée, par exemple selon la flèche repérée 16, sous la zone 2 et plaque le pied 7 contre la saillie 12 avant son arrivée au-delà de l'extrémité distale dudit pied 7.

De manière à faciliter un tel positionnement de la zone 2, cette dernière est munie, par exemple de plots 17, orientés sensiblement orthogonalement au panneau, apte à coopérer avec des réservations 18 prévues dans le moule 8.

Lesdits plots 17 contribuent également, notamment, à améliorer la solidité et la facilité de fixation dudit panneau.

Selon un mode particulier de réalisation de l'invention, on forme l'âme 1 par injection-compression, notamment afin de faciliter l'adhésion entre ladite âme 1 et l'insert 3 de la zone 2.

Naturellement, d'autres mises en oeuvre de la présente invention à la portée de l'homme de l'art, auraient pu être envisagées sans pour autant sortir du cadre de l'invention, tant qu'elle reste définie par les revendications.

## Revendications

1. Procédé de fabrication de panneau notamment destiné à l'habillage intérieur des portières de véhicule, comprenant une âme (1) présentant au moins localement dans une zone (2) d'aspect esthétique et/ou de confort une pièce de revêtement constituée au moins sur une partie de sa périphérie, au moins d'un insert (3) et d'une peau (4), ladite pièce de revêtement, étant munie, au moins au niveau de ladite partie de sa périphérie, au moins partiellement, d'une jupe (5), insérée dans une gorge (6) prévue dans l'âme (1), mettant en oeuvre un moule (8), comprenant une matrice inférieure (9) et une matrice supérieure (10), définissant entre elles un entrefer (11), dans lequel dit procédé :
- on forme ladite pièce de revêtement en prévoyant, sur au moins une partie de la longueur de ladite jupe (5), un pied (7),
- on injecte dans ledit moule (8), au moins sous ladite pièce de revêtement, une résine, apte à former l'âme (1) du panneau, caractérisé par le fait que l'on protège ladite zone (2) d'un retour de matière par ledit pied (7) en empêchant l'infiltration de la résine entre la peau (4) et l'insert (3) lors de son injection, un courant étant créé dans l'entrefer (11) avec ladite résine apte à constituer l'âme (1) de manière à plaquer localement ledit pied (7) contre une saillie (12) d'une des matrices inférieure ou supérieure (9, 10), apte à participer à la formation de la gorge (6), en réalisant ainsi avec ledit pied (7) un joint d'étanchéité virtuel.

2. Procédé selon la revendication 1, dans lequel ledit pied (7) est orienté sensiblement parallèlement au fond de la gorge (6).

3. Procédé selon la revendication 1, dans lequel ladite jupe (5) et ledit pied (7) sont constitués dudit insert (3) et de ladite peau (4).

4. Procédé selon la revendication 1, dans lequel ladite âme (1) et ledit insert (3) sont constitués du même matériau.

5. Procédé selon la revendication 1, dans lequel on prévoit un pied (7) de largeur légèrement supérieure à la largeur de ladite saillie (12).

6. Procédé selon la revendication 1, dans lequel on prévoit, dans ledit moule (8), un ou des points d'injection (15) de la résine apte à constituer l'âme (1) et on positionne ladite pièce de revêtement au-dessus desdits points d'injection (15).

7. Procédé selon la revendication 1, dans lequel on forme l'âme (1) par injection-compression.

## Claims

1. Process for manufacturing a panel intended, in particular, for the internal trim of vehicle doors, including a core (1) having, at least locally, in a aesthetic appearance and/or comfort imparting area (2), a surfacing piece constituted, at least over a part of its periphery, at least by an insert (3) and by a skin (4), said surfacing piece being provided, at least in the area of said part of its periphery, at least partially, with a skirt (5), inserted into a groove (6) provided in the core (1), making use of a mould (8), including a lower die (9) and an upper die (10), defining between them an air gap (11), in which said process:
- said surfacing piece is formed, providing, over at least a part of the length of said skirt (5), a foot (7);
- a resin, suitable for forming the core (1) of the panel is injected into said mould (8), at least under said surfacing piece;
characterised by the fact that said area (2) is protected from a back-flow of material via said foot (7) by preventing the resin from infiltrating between the skin (4) and the insert (3) when it is injected, a current being created in the air gap (11) with said resin suitable for forming the core (1) in such a way as to press said foot (7) locally against a projection (12) of one of the dies, upper or lower (9, 10), suitable for forming the groove (6), thus producing with said foot (7) a virtual seal.

2. Process according to claim 1, in which said foot (7) is orientated substantially parallel to the bottom of the groove (6).

3. Process according to claim 1, in which said skirt (5) and said foot (7) are constituted by said insert (3) and by said skin (4).

4. Process according to claim 1, in which said core (1) and said insert (3) are made of the same material.

5. Process according to claim 1, in which there is provided a foot (7) the width of which is slightly greater than the width of said projection (12).

6. Process according to claim 1, in which there are provided, in said mould (8), one or more points (15) for injecting the resin suitable for constituting the core (1), and said surfacing piece is positioned above said injection points (15).

7. Process according to claim 1, in which the core (1) is formed by injection-compression moulding.

## Patentansprüche

1. Verfahren zur Herstellung von Platten, nämlich für die Innenverkleidung von Fahrzeugtüren, die einen Kern (1) umfassen, der wenigstens örtlich in einem Ästhetik- und/oder Bequemlichkeitsbereich einen Verkleidungsteil aufweist, der wenigstens über einen Teil dessen Umkreises aus wenigstens einem Einsatz (3) und einer Haut besteht, wobei der genannte Verkleidungsteil wenigstens im Bereich des genannten Teils seines Umkreises wenigstens zum Teil mit einer Schürze (5) versehen ist, die in einer im Kern
(1) vorgesehenen Rille (6) eingeführt ist, welches eine Gußform (8) verwendet, die ein unteres Gesenk (9) und ein oberes Gesenk (10) umfaßt, die zwischen ihnen einen Spalt (11) bestimmen, bei welchem genannten Verfahren :
- den genannten Verkleidungsteil gebildet wird, indem über wenigstens einen Teil der Länge der genannten Schürze (5) einen Fuß (7) vorgesehen wird,
- in die genannte Gußform (8), wenigstens unterhalb des genannten Verkleidungsteils, ein Harz eingespritzt wird, das geeignet ist, den Kern (1) der Platte zu bilden, dadurch gekennzeichnet, daß den genannten Bereich (2) vor einem Materialrückfluß vom genannten Fuß (7) her geschützt wird, indem das Eindringen des Harzes zwischen die Haut (4) und den Einsatz (3) während dem Einspritzen desselben vermieden wird, wobei im Spalt (11) mit dem genannten Harz, das geeignet ist, den Kern (1) zu bilden, einen Strom erzeugt wird, sodaß der genannte Fuß (7) örtlich gegen einen Vorsprung (12) eines der unteren bzw. oberen Gesenke (9, 10) gedrückt wird, der geeignet ist, an der Bildung der Rille (6) beteiligt zu sein, wobei also mit dem genannten Fuß (7) eine virtuelle Dichtung zustandegebracht wird.

2. Verfahren nach Anspruch 1, bei dem der genannte Fuß (7) im wesentlichen parallel zum Boden der Rille (6) gerichtet ist.

3. Verfahren nach Anspruch 1, bei dem die genannte Schürze (5) und der genannte Fuß (7) aus dem genannten Einsatz (3) und der genannten Haut (4) bestehen.

4. Verfahren nach Anspruch 1, bei dem der genannte Kern (1) und der genannte Einsatz (3) aus demselben Material bestehen.

5. Verfahren nach Anspruch 1, bei dem ein Fuß (7) vorgesehen ist, dessen Breite geringfügig größer ist als die Breite des genannten Vorsprungs (12).

6. Verfahren nach Anspruch 1, bei dem in der genannten Gußform (8) eine oder mehrere Einspritzstellen (15) für das Harz, das geeignet ist, den Kern (1) zu bilden, vorgesehen werden und den genannten Verkleidungsteil überhalb der genannten Einspritzstellen (15) positioniert wird.

7. Verfahren nach Anspruch 1, bei dem der Kern (1) durch Einspritzen-Zusammendrücken gebildet wird.
